# EUROPÄISCHE PATENTANMELDUNG

(11) **EP 0 655 280 A1**
(43) Veröffentlichungstag der Anmeldung: **31.05.1995**
(21) Anmeldenummer: 94113004.9
(22) Anmeldetag: 20.08.1994
(51) Int. Cl.: B03B 9/06, C03B 1/00, B07B 9/00

(54) **Aufbereitungsanlage für Altglas**

(30) Priorität: 26.10.1993 DE 9316325 U
(71) Anmelder: Süddeutsche Altglas-Rohstoff GmbH, D-88410 Bad Wurzach (DE)
(72) Erfinder: Grünbeck, Rainer, D 88410 Bad Wurzach (DE); Hlawatscheck, Peter, D 88410 Bad Wurzach (DE)
(74) Vertreter: Engelhardt, Guido, Dipl.-Ing.

(57) **Zusammenfassung**

Bei einer Anlage (1) zur Verwertung von bei der Altglasaufbereitung anfallenden Reststoffen (2) ist eine Siebmaschine (11) vorgesehen, in der aus den Reststoffen (2) Glasteile (17, 18) unterschiedlicher Körnung ausscheidbar sind, des weiteren, eine oder mehrere der Siebmaschine (11) nach- und/oder vorgeschalteter und/oder unmittelbar zugeordneter Absaugeinrichtungen (21) und/oder Stangenroste (36) zur Entnahme von Leichtstoffen (28, 29, 37). Auch kann der Siebmaschine (11) eine oder mehrere Vorrichtungen (34, 35) zur Aufteilung und/oder Zerkleinerung der verbliebenen Feststoffe (33) nachgeschaltet werden.

Mit dieser Anlage (1) ist es auf einfache und wirtschaftliche Art möglich, die bei der Aufbereitung von Altglas anfallenen Reststoffe (2) auszuscheiden und somit wiederum zu verwerten, ohne daß Verunreinigungen zu befürchten sind. Durch die einzelnen Aggregate der Anlage (1) werden nämlich die Altglasteile vollständig von den anderen Teilen getrennt, auch werden metallische Teile sowie Leichtstoffe problemlos ausgeschieden.

## Beschreibung

Die Erfindung bezieht sich auf eine Anlage zur Verwertung von bei der Altglasaufbereitung anfallenden Reststoffen.

Bei der Herstellung von Glaswaren, insbesondere von Hohlglasbehältern, wird der Glasschmelze mehr und mehr Altglas beigegeben, aus dem zuvor nicht einschmelzbare Bestandteile, um Verunreinigungen zu vermeiden, ausgeschieden wurden. Diese aus unterschiedlichen Materialien bestehenden Reststoffe entsprechen mitunter einem Anteil von 5 % der aufbereiteten Altglasmenge und enthalten verständlicherweise auch einen hohen Glasanteil. Da eine Verwertung der Reststoffe bisher nicht wirtschaftlich erschien, werden diese auf Mülldeponien verbracht. Dies ist aber nicht nur sehr zeitaufwendig und verursacht hohe Transportkosten, sondern durch deren Ablagerung wird auch ein großes Deponievolumen beansprucht, das zusätzlich einen hohen Kostenaufwand erfordert. Eine wirtschaftliche Verwertung der bei der Altglasaufbereitung anfallenden Reststoffe ist demnach nicht gegeben.

Aufgabe der Erfindung ist es daher, eine Anlage zu schaffen, mittels der es auf sehr einfache und kostengünstige Weise möglich ist, die bei der Altglasaufbereitung zwangsläufig anfallenden Reststoffe aufzubereiten und somit wiederum zu verwerten. Vor allem soll erreicht werden, daß keine hohen Deponie- und Transportkosten in Kauf zu nehmen sind und daß der hohe Altglasanteil der Reststoffe zurückgewonnen und demach ebenfalls einer Glashütte zur Verfügung gestellt werden kann.

Gemäß der Erfindung ist die Anlage zur Verwertung von bei der Altglasaufbereitung anfallenden Reststoffen gekennzeichnet durch eine Siebmaschine, in der aus den zugeführten Reststoffen Glasteile unterschiedlicher Körnung ausscheidbar sind, einer oder mehrerer dieser nach- und/oder vorgeschalteter und/oder unmittelbar zugeordneter Absaugvorrichtungen und/oder Stangenroste zur Entnahme von Leichtstoffen sowie gegebenenfalls einer oder mehrerer der Siebmaschine nachgeschalteter Vorrichtungen zur Aufteilung und/oder Zerkleinerung der verbliebenen Feststoffe.

Zweckmäßig ist es hierbei, ein der Siebmaschine zugeordnetes Fördermittel mit einem vorzugsweise an eine Schrottpresse angeschlossenen Magnetabscheider zur Entnahme metallischer Bestandteile zu versehen, der bei einem als Förderband ausgebildeten Fördermittel aus einem Überbandmagnet bestehen sollte.

Des weiteren ist es angebracht, das der Siebmaschine vorgeschaltete Fördermittel als vorzugsweise frequenzgesteuerte Rüttelrinne auszubilden und dem Fördermittel einen Entnahmetrichter zur Bevorratung der Reststoffe zuzuordnen.

Vorteilhaft ist es ferner, wenn die Siebmaschine mindestens zwei Körnungsbereiche, beispielsweise bis 1 mm und 1 bis 6 mm, aufweist.

Zum Weitertransport der verbliebenen Reststoffe sollte der Siebmaschine eine oder mehrere Förder- oder Verteilerrinnen nachgeschaltet werden.

Mittels der Vorrichtung zur Aufteilung der verbliebenen dieser durch die Förder- oder Verteilerrinnen zuführbaren Feststoffe sollten aus diesen Keramikteile, Steine, Porzellan, Blei- und/oder Aluminiumteile, beispielsweise durch optische Erkennung, ausscheidbar sein, die Vorrichtung zur Zerkleinerung der verbliebenen Feststoffe kann durch einen Brecher gebildet sein, dem die Feststoffe durch die Förder- oder Verteilerrinnen zuführbar sind.

Die den Förder- oder Verteilerrinnen zugeordnete Absaugvorrichtung kann in einfacher Weise durch eine oder mehrere vorzugsweise über diesen angeordnete Unterdruckdüsen gebildet werden, die an einen, vorzugsweise mit einem nachgeschalteten Filter versehenen Zyklon angeschlossen werden können.

Der der Siebmaschine zugeordnete Stangenrost zur Entnahme von Leichtstoffen sollte als Rechen ausgebildet und in dieser angeordnet sein.

Angezeigt ist es des weiteren, der Siebmaschine, dem Zyklon und/oder dem Filter zur Aufnahme von diesen entnehmbaren Leichtstoffen einen Preßbehälter zuzuordnen.

Wird eine Anlage gemäß der Erfindung ausgebildet, so ist es auf einfache und wirtschaftliche Art möglich, die bei der Aufbereitung von Altglas anfallenden Reststoffe aufzubereiten und somit wiederum zu verwerten, insbesondere können die hohen Altglasanteile der Reststoffe ebenfalls einer Glashütte zur Verfügung gestellt werden, ohne daß Verunreinigungen zu befürchten sind. Durch die einzelnen Aggregate der Anlage werden nämlich die Altglasanteile, die bis zu 80 % der Reststoffe betragen können, vollständig von den anderen Teilen getrennt, auch werden die metallischen Teile sowie die Leichtstoffe, wie Papier, problemlos ausgeschieden. Und die verbleibenden Feststoffe können ebenfalls noch z. B. durch optische Erkennung getrennt werden, eine nahezu vollständige Verwertung aller Teile der Reststoffe ist demnach möglich. Hohe Deponie- und Transportkosten werden somit vermieden, eine Amortisation der Anlage in kurzer Zeit ist dadurch gewährleistet.

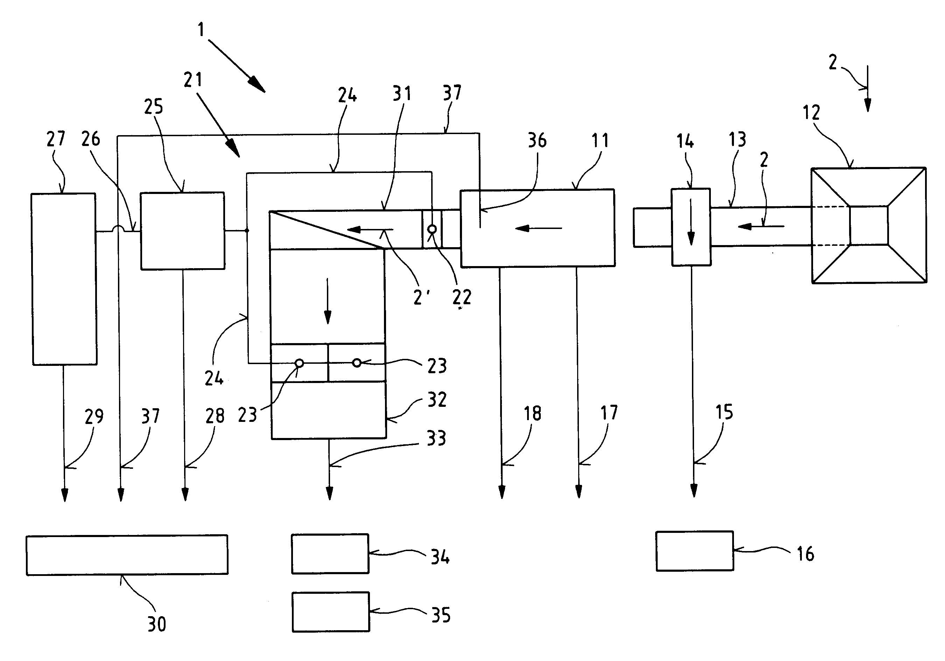

In der Zeichnung ist eine Anlage zur Verwertung von bei der Altglasaufbereitung anfallenden Reststoffen in schematischer Weise dargestellt und nachfolgend im einzelnen erläutert.

Die mit 1 bezeichnete Anlage dient zur Verwertung von bei der Altglasaufbereitung anfallenden Reststoffen 2 und besteht im wesentlichen aus einer Siebmaschine 11 zur Ausscheidung von Altglasteilen 17 und 18 unterschiedlicher Körnung, einer Absaugvorrichtung 21, um Leichtstoffe 28, 29 den verbliebenen Reststoffen 2' zu entnehmen, sowie gegebenenfalls der Siebmaschine 11 nachgeschalteter Vorrichtungen 34 und 35 zur Aufbereitung bzw. Zerkleinerung von Feststoffen 33. Der Siebmaschine 11 werden die Reststoffe 2 mittels eines Fördermittels 13, das als frequenzgesteuerte Rüttelrinne ausgebildet sein kann, von einem Aufnahmetrichter 12, in dem die Reststoffe 2 bevorratet werden, zugeführt.

Über dem Fördermittel 13 ist ein Magnetabscheider 14 angebracht, mittels dem Metallteile 15 den Reststoffen 2 entnommen werden. In einer Schrottpresse 16 werden die Metallteile 15 verdichtet, ein einfacher Abtransport und eine Verwertung der Metallteile 15 ist somit gegeben.

Die Absaugvorrichtung 21 zur Entnahme der Leichtstoffe 28 und 29 besteht aus Unterdruckdüsen 22 und 23, die über der Siebmaschine 11 nachgeschalteter Förder- und Verteilerrinnen 31 und 32 angeordnet sind. Über Leitungen 24 sind die Unterdruckdüsen 22 und 23 an einen Zyklon 25 angeschlossen, in dem die abgesaugte Luft von den Leichtstoffen höherer Dichte befreit wird. Die noch staubhaltige Luft wird über eine Leitung 26 einem Filter 27 zugeleitet, in dem diese gereinigt und ins Freie abgeblasen wird.

Die Siebmaschine 11 ist des weiteren mit einem Stangenrost 36 in Form eines Rechens zur Entnahme von Leichtstoffen 37 ausgestattet. Die unmittelbar der Siebmaschine 11 entnommenen Leichtstoffe 37 Sowie die in dem Zyklon 25 und dem Filter 27 ausgeschiedenen Leichtstoffe 28 und 29 werden einem Preßbehälter 30 zugeführt, in dem diese verdichtet werden.

Da die in der Siebmaschine 11 zunächst ausgeschiedenen Glasteile 17, die eine Körnung von bis zu 1 mm aufweisen, etwa 30 bis 35 %, die eine Körnung von 1 bis 6 mm aufweisenden Glasteile 18 etwa 20 bis 25 % und der Glasanteil der Feststoffe 33 etwa 20 bis 30 % der der Anlage 1 zugeführten Reststoffe 2 betragen können, werden demnach durchschnittlich etwa 70 bis 80 % der Reststoffe 2 als wieder verwertbares Altglas gewonnen. Und da die Magnetteile 15 sowie die Leichtstoffe 28, 29 und 37 uneingeschränkt und Teile der in der Vorrichtung 34 ausgeschiedenen Feststoffe 33 bedingt wieder verwendbar sind, ist eine hohe Wirtschaftlichkeit der Anlage 1 gewährleistet.

## Patentansprüche

1. Anlage (1) zur Verwertung von bei der Altglasaufbereitung anfallenden Reststoffen (2),
**gekennzeichnet durch**
eine Siebmaschine (11), in der aus den zugeführten Reststoffen (2) Glasteile (17, 18) unterschiedlicher Körnung ausscheidbar sind, einer oder mehrerer dieser nach- und/oder vorgeschalteter und/oder unmittelbar zugeordneter Absaugvorrichtungen (21) und/oder STangenroste (36) zur Entnahme von Leichtstoffen (28, 29; 37) sowie gegebenenfalls einer oder mehrerer der Siebmaschine (21) nachgeschalteter Vorrichtungen (34, 35) zur Aufteilung und/ oder Zerkleinerung der verbliebenen Feststoffe (33).

2. Anlage nach Anspruch 1,
**dadurch gekennzeichnet,**
daß ein der Siebmaschine (21) zugeordnetes Fördermittel (13) mit einem vorzugsweise an einer Schrottpresse angeschlossener Magnetabscheider (14) zur Entnahme metallischer Bestandteile (15) versehen ist, der bei einem als Förderband ausgebildeten Fördermittel (13) aus einem Überbandmagnet besteht.

3. Anlage nach Anspruch 1 oder 2,
**dadurch gekennzeichnet,**
daß das der Siebmaschine (21) vorgeschaltete Fördermittel (13) als vorzugsweise frequenzgesteuerte Rüttelrinne ausgebildet ist.

4. Anlage nach einem oder mehreren der Ansprüche 1 bis 3,
**dadurch gekennzeichnet,**
daß dem Fördermittel (13) ein Entnahmetrichter (12) zur Bevorratung der Reststoffe (2) zugeordnet ist.

5. Anlage nach einem oder mehreren der Ansprüche 1 bis 4,
**dadurch gekennzeichnet,**
daß die Siebmaschine (21) mindestens zwei Körnungsbereiche, beispielsweise bis 1 mm und 1 bis 6 mm, aufweist.

6. Anlage nach einem oder mehreren der Ansprüche 1 bis 5,
**dadurch gekennzeichnet,**
daß der Siebmaschine (21) zum Weitertransport der verbliebenen Reststoffe (2') eine oder mehrere Förder- oder Verteilerrinnen (31, 32) nachgeschaltet sind.

7. Anlage nach einem oder mehreren der Ansprüche 1 bis 6,
**dadurch gekennzeichnet,**
daß mittels der Vorrichtung (34) zur Aufteilung der verbliebenen dieser durch die Förder- oder Verteilerrinnen (31, 32) zuführbaren Feststoffe (33) aus diesen Keramikteile, Steine, Porzellan, Blei- und/oder Aluminiumteile, beispielsweise durch optische Erkennung, ausscheidbar sind.

8. Anlage nach einem oder mehreren der Ansprüche 1 bis 7,
**dadurch gekennzeichnet,**
daß die Vorrichtung (35) zur Zerkleinerung der verbliebenen Feststoffe (33) durch einen Brecher gebildet ist, dem die Feststoffe (33) durch die Förder- oder Verteilerrinnen (31, 32) zuführbar sind.

9. Anlage nach einem oder mehreren der Ansprüche 1 bis 8,
**dadurch gekennzeichnet,**
daß die den Förder- oder Verteilerrinnen (31, 32) zugeordnete Absaugvorrichtung (21) durch eine oder mehrere vorzugsweise über diesen angeordnete Unterdruckdüsen (22, 23) gebildet sind.

10. Anlage nach Anspruch 9,
**dadurch gekennzeichnet,**
daß die Unterdruckdüsen (22, 23) an einen, vorzugsweise mit einem nachgeschalteten Filter (27) versehenen Zyklon (25), angeschlossen sind.

11. Anlage nach einem oder mehreren der Ansprüche 1 bis 10,
**dadurch gekennzeichnet,**
daß der der Siebmaschine (21) zugeordnete Stangenrost (36) zur Entnahme von Leichtstoffen (37) als Rechen ausgebildet und in dieser angeordnet ist.

12. Anlage nach einem oder mehreren der Ansprüche 1 bis 11,
**dadurch gekennzeichnet,**
daß der Siebmaschine (11), dem Zyklon (25) und/oder dem Filter (27) zur Aufnahme von diesen entnehmbarer Leichtstoffen (28,29,37) ein Preßbehälter (30) zugeordnet ist.
